# FASCICULE DE BREVET EUROPEEN

(11) **EP 1 700 631 B1**
(45) Date de publication et mention de la délivrance du brevet: **30.06.2010**
(21) Numéro de dépôt: 06290334.9
(22) Date de dépôt: 28.02.2006
(51) Int. Cl.: B01D 53/86, C01B 17/05

(54) **Procédé perfectionné de traitement d'un gaz contenant de l'hydrogène sulfuré et du dioxyde de soufre**
Verbessertes Verfahren zur Behandlung von Schwefelwasserstoff und Schwefeldioxide enthaltenden Gasen
Improved process for treating gases containing hydrogen sulfur and sulfur dioxide

(30) Priorité: 09.03.2005 FR 0502367
(43) Date de publication de la demande: 13.09.2006
(73) Titulaire: Institut Français du Pétrole, 92852 Rueil Malmaison Cedex (FR)
(72) Inventeur: Carrette, Pierre Louis, 69005 Lyon (FR); Delfort, Bruno, 75005 Paris (FR); Drozdz, Sophie, 69003 Lyon (FR); Raynal, Ludovic, 69600 Oullins (FR)

(56) Documents cités:
- WO-A-90/07467
- FR-A- 2 122 674
- FR-A- 2 756 197
- FR-A- 2 757 147
- FR-A- 2 784 370
- FR-A- 2 786 111
- US-A- 3 516 793
- US-B1- 6 495 117

## Description

### Domaine de l'invention

La présente invention concerne le traitement d'effluents gazeux contenant de l'hydrogène sulfuré et du dioxyde de soufre.

Elle a pour objet un procédé de traitement d'un effluent gazeux contenant de l'hydrogène sulfuré et du dioxyde de soufre utilisant un solvant organique qui comprend un système catalytique permettant de ralentir la formation de sous-produits au cours dudit traitement.

Le procédé selon l'invention peut être utilisé par exemple pour traiter les effluents issus du procédé Claus. Mais il s'applique plus généralement à tout gaz contenant de l'hydrogène sulfuré et du dioxyde de soufre. Il n'est pas nécessaire que H₂S et/ou SO₂ soient admis sous forme gazeuse, l'un de ces gaz ou même ces deux gaz pouvant initialement être présents à l'état dissous dans le solvant contenant le système catalytique de l'invention.

Le procédé Claus est largement utilisé, notamment en raffinerie (en aval des unités d'hydrodésulfuration ou de craquage catalytique) et en traitement du gaz naturel, pour récupérer du soufre élémentaire à partir de charges gazeuses contenant de l'hydrogène sulfuré. Cependant, les effluents émis par les unités Claus renferment, même après plusieurs étages catalytiques, des quantités non négligeables de gaz acides, principalement H₂S et SO₂. Il est alors nécessaire de traiter ces effluents d'unité Claus pour éliminer la majorité des composés toxiques, principalement H₂S et SO₂, de façon à respecter les normes antipollution.

### Art antérieur

II est connu de récupérer à partir d'une unité Claus environ 95 % en poids de soufre présent. Un traitement de l'effluent d'unité Claus au moyen d'une unité CLAUSPOL® (appellation commerciale d'un procédé industriel) permet d'atteindre généralement 99,8 % en poids de soufre récupéré, à partir de la réaction exothermique de Claus :

2 H₂S + SO₂ ⇔ 3 S + 2 H₂O

Le brevet FR-B-1 592 092 décrit un traitement d'effluent d'unité Claus utilisant un milieu réactionnel constitué par un solvant organique et au moins un catalyseur comprenant un sel alcalin ou alcalino-terreux d'un acide organique.

La mise en contact du gaz à traiter et du solvant organique contenant le catalyseur s'effectue dans un réacteur-contacteur gaz-liquide équipé d'éléments de contact, c'est-à-dire de garnissages de type vrac ou de type structuré, de monolithes, de plateaux de colonne, de mousse métallique ou céramique ou de tout autre équipement favorisant le transfert de matière du gaz vers le liquide. La température du réacteur est contrôlée par passage du solvant dans un échangeur thermique, de façon à favoriser le taux le plus élevé possible de conversion en soufre, tout en évitant la formation de soufre solide.

Dans ce type d'unité, le solvant ayant une capacité limitée à dissoudre le soufre élémentaire, se charge au-delà de la saturation en soufre élémentaire liquide libre, que l'on peut alors séparer du solvant par simple décantation. Cette décantation soufre liquide - solvant s'effectue dans une zone de décantation liquide-liquide, qui peut être placée par exemple en fond du réacteur-contacteur.

Le fonctionnement d'une telle unité est décrit dans les références suivantes :
- Y. Barthel, H. Gruhier: "The IFP Clauspol 1500 Process: Eight Years of Industrial Experience", Chem. Eng. Monogr., 10 (Large Chem. Plants), 1979, p. 69-86 (que l'on peut traduire par "Procédé Clauspol 1500: 8 années d'expérience) ;
- Hennico A., Barthel Y., Benayoun D., Dezael C. : "Clauspol 300: The New IFP TGT Process", [for presentation at the AIChE Summer National Meeting, Denver (Colorado), August 14-17, 1994].

Il est par ailleurs connu que le taux de désulfuration d'une unité de ce type peut être amélioré en désaturant le solvant en soufre dans une boucle de désaturation, par exemple selon un procédé décrit dans le brevet FR-B-2 753 396 du demandeur. Dans ce cas, une partie de la solution liquide-liquide de solvant et de soufre soutirée à l'extrémité du réacteur-contacteur est refroidie afin de cristalliser le soufre.

Ce soufre cristallisé est alors séparé du solvant par divers moyens de séparation solide-liquide, tels que la filtration, la décantation ou la centrifugation. On obtient alors, d'une part, un solvant appauvri en soufre, qui peut être recyclé vers le réacteur-contacteur, et, d'autre part, une suspension enrichie en soufre solide, qui peut être réchauffée pour fondre le soufre, puis envoyée dans une zone de décantation liquide-liquide solvant-soufre, d'où on récupère le soufre liquide.

Un tel procédé peut toutefois être limité dans son application. En effet, des réactions secondaires ont en général lieu dans le réacteur-contacteur, réactions qui conduisent à la formation de sous-produits, en majorité des sels tels que les sulfates ou les thiosulfates d'alcalins ou d'alcalino-terreux, provenant par exemple de la dégradation lente du catalyseur.

Ces sous-produits ont tendance à s'accumuler à la surface des éléments de contact, ce qui rend difficile la décantation du soufre liquide et augmente la perte de charge au travers du réacteur-contacteur. De ce fait, il peut être nécessaire d'effectuer périodiquement un arrêt de l'unité pour procéder à l'élimination de ces sels, par lavage.

II est par ailleurs connu que les sous-produits solides d'une unité de ce type peuvent être éliminés, par exemple selon un procédé décrit dans le brevet FR-B-2 784 370. Ce procédé comporte les étapes caractéristiques suivantes :
- on prélève une fraction du solvant comportant les sous-produits solides,
- on envoie ladite fraction à une étape de traitement,
- à l'issue de laquelle on récupère au moins un flux comportant la majorité des sous-produits et un flux composé essentiellement de solvant quasiment exempt de sous-produits.

Dans le brevet FR-B-2 786 111, l'étape d'élimination des sous-produits est réalisée à une température permettant la formation et la croissance des cristaux de ces sous-produits.

Les procédés décrits dans les brevets FR-B-2 784 370 et FR-B-2 786 111 permettent d'éliminer les sous-produits sans arrêter l'unité mettant en oeuvre le procédé. Cependant, la quantité de sous-produits formés est inchangée par rapport à la mise en oeuvre du traitement décrit dans le brevet FR-B-1 592 092.

Ces sous-produits provenant essentiellement de la dégradation lente du catalyseur, l'idée à la base de la présente invention est d'utiliser un autre type de système catalytique permettant de diminuer la vitesse de formation des sous-produits, donc de diminuer la quantité de ces sous-produits formés sur une période de fonctionnement donnée.

De manière surprenante, il a été trouvé un système catalytique dont l'utilisation réduit dans des proportions importantes la formation de sous-produits.

Ces sous-produits étant généralement éliminés par lavage à l'eau, soit au niveau du réacteur-contacteur, soit dans l'étape d'élimination telle que décrite dans les brevets FR-B-2 784 370 et FR-B-2 786 111, la présente invention permet donc de diminuer la fréquence des lavages, et de diminuer la quantité de sous-produits à traiter dans les systèmes de traitement des eaux associés au procédé, ce qui représente un gain économique important pour l'exploitant.

### Description détaillée de l'invention

Ainsi l'objet de l'invention est de fournir un procédé de traitement d'un gaz contenant de l'hydrogène sulfuré (H₂S) et du dioxyde de soufre (SO₂) dans lequel on met en contact, à une température adéquate, en général comprise entre 20°C et 160°C, ledit gaz avec un solvant organique contenant au moins un système catalytique soluble dans ledit solvant, on récupère d'une part un effluent gazeux appauvri en hydrogène sulfuré et en dioxyde de soufre, et d'autre part du soufre liquide séparé du solvant par une décantation liquide-liquide, le procédé étant caractérisé en ce que le système catalytique comprend au moins un composé comportant au moins un groupement fonctionnel A consistant en une fonction acide carboxylique et au moins un groupement fonctionnel B comportant au moins un atome d'azote et susceptible de réaliser une réaction de type acide-base avec au moins un groupement fonctionnel A dans les conditions de mise en oeuvre dudit procédé).

Le solvant organique utilisé peut être choisi parmi les nombreux solvants organiques stables dans les conditions de mise en oeuvre du procédé de l'invention. De préférence, le solvant utilisé peut être constitué d'un ou plusieurs solvants organiques choisis parmi les solvants décrits dans le brevet FR-B-1 592 092.

On citera notamment le sulfolane, les esters phosphoriques, les alcools ou polyols lourds ayant par exemple de 12 à 20 atomes de carbone, les esters d'alcools ou de polyols, et de préférence les solvants appartenant au groupe formé par les alkylèneglycols, les éthers et/ou les esters d'alkylèneglycols, les polyalkylèneglycols, les éthers et/ou les esters de polyalkylèneglycols.

On citera, à titre d'exemples de solvants appartenant au groupe préféré, le triéthylèneglycol, le tétraéthylèneglycoldiméthyléther, le décaéthylèneglycoléthyléther, le polyéthylèneglycol de poids moléculaire moyen 200 g/mole, le polyéthylèneglycol de poids moléculaire moyen 400 g/mole et le dipropylèneglycol.

Le solvant peut contenir de 0 à 90 % poids d'eau, de préférence de 0 à 50 % et idéalement de 0 à 20 %. L'eau peut être ajoutée au solvant et/ou provenir de l'absorption de l'eau éventuellement présente dans le gaz traité selon l'invention.

Le système catalytique peut comprendre au moins un composé comportant au moins un groupement fonctionnel A et au moins un composé comportant au moins un groupement fonctionnel B. Il peut aussi être constitué d'au moins un composé comportant à la fois les deux types de groupements fonctionnels A et B.

Le (ou les) composé(s) constituant le système catalytique peu(ven)t également comporter au moins un groupement fonctionnel d'un type différent des groupements A et B, la caractéristique essentielle restant que le système catalytique pris dans son ensemble fait dans tous les cas apparaître au moins une fois le groupement A et au moins une fois le groupement B.

Comme mentionné plus haut, le système catalytique peut comprendre au moins un composé comportant au moins un groupement fonctionnel A et au moins un composé comportant au moins un groupement fonctionnel B.

Dans ce cas, les groupements fonctionnels A peuvent être portés par des composés choisis de préférence parmi les acides ou les polyacides décrits dans le brevet FR-B-1 592 092. On peut ainsi citer, à titre d'exemples non limitatifs, l'acide hexanoïque, l'acide adipique, l'acide tartrique, l'acide citrique, l'acide cyclohexanecarboxylique, l'acide benzoïque, l'acide salicylique, l'acide 3-hydroxybenzoïque, l'acide 2,5-dihydroxybenzoïque, l'acide 3,5-dihydroxybenzoïque, l'acide phtalique, l'acide isophtalique, l'acide téréphtalique, l'acide 5-hydroxy-isophtalique et l'acide nicotinique.

Selon une variante de l'invention, le groupement fonctionnel A peut être porté par un composé obtenu par une estérification partielle d'un polyacide ou d'un anhydride d'acide par le solvant selon l'invention, lorsque ledit solvant contient au moins une fonction alcool. Ce type de composés est décrit par exemple dans le brevet FR-B-2 115 721. A titre d'exemple, on peut citer dans cette catégorie l'acide phtalique mono-estérifié par le polyéthylèneglycol de masse molaire moyenne égale à 400.

Les groupements fonctionnels B désignent tous les groupements fonctionnels comportant un atome d'azote et qui sont susceptibles de réaliser une réaction de type acide-base avec au moins un groupement fonctionnel A, dans les conditions de mise en oeuvre du procédé de l'invention.

Les groupements fonctionnels B peuvent être par exemple et sans limitation, des fonctions amine primaire, secondaire ou tertiaire, amine aromatique ou des hétérocycles saturés ou non, aromatiques ou non, comportant au moins un atome d'azote.

Les composés comportant des groupements fonctionnels B peuvent être à titre d'exemples, des alcanolamines, la pyridine, la pyrimidine, la pipéridine, la pipérazine, la morpholine, l'aniline, la benzylamine, la phénéthylamine, la picoline, l'hydrazine, l'hydroxylamine, la quinoline, l'isoquinoline, l'imidazole, le 1,2,3-triazole, le 1,2,4-triazole, l'isoxazole, le thiazole, le benzothiazole, le tétrazole, le thiadiazole, la thiazine, la guanidine ou leurs dérivés.

Ces composés peuvent comporter par exemple et sans limitation de nombre, des groupes fonctionnels choisis parmi les groupes hydroxy, amino, carboxy, alkyles, alkoxy, phényle, benzyle, hydroxyalkyles, phénol, aminoalkyles, alkylamino, alkylèneglycols et polyalkylèneglycols. Tous ces composés sont compatibles avec la définition du groupement fonctionnel B.

Parmi les composés préférés comportant au moins un groupement fonctionnel B, utilisables selon l'invention, on citera à titre d'exemples la diéthanolamine, le 2-méthylimidazole, le 2-isopropylimidazole et le 2-éthyl-4-méthylimidazole.

Le système catalytique peut aussi être constitué d'au moins un composé comportant à la fois les deux types de groupements fonctionnels A et B.

Dans ce cas, les composés comportant sur une même molécule au moins un groupement fonctionnel A et au moins un groupement fonctionnel B peuvent être par exemple et sans limitation, choisis parmi l'acide anthranilique, l'acide picolinique, l'acide citrazinique, l'acide isocinchoméronique, l'acide 4-aminobenzoïque, l'acide 3-aminobenzoïque, l'acide 4-(aminométhyl) benzoïque, l'acide 3-(diméthylamino) benzoïque, l'acide 5-aminoisophtalique, l'acide 2,5-pyridinedicarboxylique, la 2-phénylglycine, l'acide 2,6-pyridinedicarboxylique, l'acide 2,4,6-pyridinetricarboxylique, l'acide 2,3-pyrazinedicarboxylique, l'acide 4-aminophénylacétique, la N-phénylglycine, la tyrosine, la N-phénylalanine, l'acide 4-(2-aminoéthyl) benzoïque, le 2-carboxypyrrole, la proline, la thréonine, l'acide glutamique, l'acide pipécolinique, l'acide 4-hydroxy-3-(morpholinométhyl) benzoïque, l'acide aspartique et leurs dérivés.

Parmi les composés préférés comportant à la fois les groupements fonctionnels A et B sur la même molécule, on peut citer l'acide 3-aminobenzoïque et l'acide 5-aminoisophtalique.

Dans tous les cas, le rapport molaire de tous les groupements fonctionnels A sur tous les groupements fonctionnels B du système catalytique est préférentiellement compris entre 0,1 et 100, de préférence entre 0,5 et 10, et de manière encore préférée entre 1 et 5.

La concentration du système catalytique dans le solvant est avantageusement comprise entre 0,1 et 20 % en poids, et plus avantageusement entre 0,5 et 10 % en poids.

La température à laquelle s'effectue la mise en contact du gaz à traiter avec le solvant contenant le système catalytique selon l'invention se situe préférentiellement entre 115°C et 160°C.

Le procédé selon l'invention est particulièrement bien adapté au traitement de gaz ayant une teneur en gaz acides (H₂S + SO₂) comprise entre 0,1 et 100 % en volume, plus particulièrement de gaz ayant une teneur faible en gaz acides (H₂S + SO₂), par exemple entre 0,1 et 50 % en volume, et plus particulièrement encore entre 0,5 et 5 % en volume.

Il n'est pas nécessaire que H₂S et/ou SO₂ soient admis sous forme gazeuse, l'un au moins de ces gaz pouvant être présent sous forme de solution préalablement réalisée dans l'un des solvants de l'invention.

Du point de vue de la mise en oeuvre du procédé, toute technologie classique de mise en contact d'un gaz avec un liquide, c'est à dire favorisant le transfert de matière dé la phase gaz vers la phase liquide est utilisable. Parmi ces technologies classiques on peut citer les garnissages de type vrac ou de type structuré ou les plateaux de colonne.

Dans une variante préférée, on pourra utiliser une technologie faisant appel à des monolithes ou à des mousses céramiques ou métalliques, à l'intérieur desquels circule le mélange gaz-liquide. Le monolithe se définit comme un ensemble de canaux parallèles et identiques d'une section typique de l'ordre de quelques millimètres carrés, à l'intérieur desquels circulent le gaz et le liquide. L'intérêt de ces monolithes et mousses est de permettre un écoulement parfaitement défini du système gaz-liquide, et de favoriser les transferts de matière entre les phases en présence.

### Exemples

Les trois exemples ci-dessous permettent d'illustrer l'avantage procuré par l'invention (Exemples 2 et 3) par rapport à un catalyseur selon l'art antérieur (Exemple 1).

Dans les trois exemples ci-dessous, le gaz à traiter a les caractéristiques suivantes :
- H₂S : 2 NI/h (normaux litres/heure)
- SO₂ : 1 NI/h
- H₂O : 30 NI/h
- N₂ :67 NI/h

La pression est la pression atmosphérique.

Le gaz est mis en contact avec le solvant à 125°C dans une colonne en verre de 3 cm de diamètre équipée d'éléments de contact de type plateaux perforés. Le solvant est constitué de 500 millilitres de polyéthylèneglycol de masse moléculaire moyenne 400 g/mole (PEG 400) contenant le système catalytique.

Une analyse chromatographique du gaz épuré permet de contrôler le rendement de conversion des gaz soufrés (H₂S et SO₂) en soufre.

Le soufre formé par la réaction chimique est liquide. II se sépare du solvant en bas de colonne par simple décantation.

Dans les trois exemples, la durée de l'expérimentation est de 300 heures.

### Exemple 1 (selon l'art antérieur)

Le système catalytique est du salicylate de sodium à une concentration de 100 millimoles/kg.

Dans cet exemple, la dégradation du système catalytique conduit à la formation de Na₂SO₄ qui est peu soluble dans le PEG 400 (solubilité 1,2 millimoles/kg à 125°C).

Ce sel précipite donc au fur et à mesure de sa formation. La quantité de sel formé en fonction du temps est déterminée par dosage des ions sodium résiduels en solution dans le PEG 400.

La technique employée pour ce dosage est l'électrophorèse capillaire. Il existe une relation linéaire entre la quantité d'ions sodium perdue par précipitation en fonction de la quantité d'H₂S converti.

Ainsi, dans cet exemple, 1,5 millimole de Na⁺ sont précipitées par mole d'H₂S convertie, soit 0,75 millimole de Na₂SO₄ sont formées par mole d'H₂S convertie.

### Exemple 2 (selon l'invention)

Le système catalytique est constitué de 100 millimoles/kg d'acide salicylique (composé portant le groupement fonctionnel A) en présence de 100 millimoles/kg de diéthanolamine (composé portant le groupement fonctionnel B).

Dans cet exemple, la dégradation du système catalytique conduit à la formation de sulfate de diéthanolamine protonée. Ce sel est plus soluble dans le PEG 400 que Na₂SO₄ et la saturation du solvant n'a pas été atteinte dans la durée de l'expérience.

Ainsi, la formation de ces sulfates de diéthanolamine protonée est suivie par dosage des ions sulfate en solution dans le PEG 400. La technique employée pour ce dosage est l'électrophorèse capillaire. Comme dans l'Exemple 1, il apparaît une relation linéaire entre la quantité d'ions sulfate formés en fonction de la quantité d'H₂S converti.

On a obtenu le résultat suivant : 0,088 millimoles de sulfates de diéthanolamine protonée sont formées par mole d'H₂S convertie.

Dans cet exemple, la formation de sels de type sulfate est donc 8,5 fois plus faible qu'avec un système catalytique selon l'art antérieur (Exemple 1).

### Exemple 3 (selon l'invention)

Le système catalytique est constitué de 100 millimoles/kg d'acide salicylique en présence de 100 millimoles/kg de 2-méthylimidazole.

Dans cet exemple, la dégradation du système catalytique conduit à la formation de sulfate de 2-méthylimidazole protoné. Ce sel est plus soluble dans le PEG 400 que Na₂SO₄ et la saturation n'a pas été atteinte dans la durée de l'expérience. Ainsi, la formation de ces sulfates de 2-méthylimidazole protoné est suivie par dosage des ions sulfate en solution dans le PEG 400. La technique employée pour ce dosage est l'électrophorèse capillaire. Comme dans les exemples 1 et 2, il apparaît une relation linéaire entre la quantité d'ions sulfate formés en fonction de la quantité d'H₂S converti.

On a obtenu le résultat suivant : 0,096 millimoles de sulfates de 2-méthylimidazole protoné formées par mole d'H₂S convertie.

Dans cet exemple, la formation de sels de type sulfate est environ 7,8 fois plus faible qu'avec un système catalytique selon l'art antérieur (Exemple 1).

## Revendications

1. Procédé de traitement d'un gaz contenant de l'hydrogène sulfuré (H₂S) et du dioxyde de soufre (SO₂), dans lequel on met en contact ledit gaz avec un solvant organique contenant un système catalytique soluble dans ledit solvant, on récupère d'une part un effluent gazeux appauvri en hydrogène sulfuré et en dioxyde de soufre, et d'autre part du soufre liquide séparé du solvant par une décantation liquide-liquide, le procédé étant **caractérisé en ce que** ledit système catalytique comprend au moins un composé comportant au moins un groupement fonctionnel A consistant en une fonction acide carboxylique et au moins un composé, distinct ou non, comportant au moins un groupement fonctionnel B comportant au moins un atome d'azote et susceptible de réaliser une réaction de type acide-base avec au moins un groupement fonctionnel A dans les conditions de mise en oeuvre dudit procédé.

2. Procédé selon la revendication 1 **caractérisé en ce que** le solvant est choisi dans le groupe formé par les alkylèneglycols, les éthers et/ou les esters d'alkylèneglycols, les polyalkylèneglycols, les éthers et/ou les esters de polyalkylèneglycols.

3. Procédé selon l'une des revendications 1 et 2 **caractérisé en ce qu'**au moins un des composés contenant le groupement fonctionnel A est obtenu par une estérification partielle d'un polyacide ou d'un anhydride d'acide par ledit solvant, lorsque ledit solvant contient au moins une fonction alcool.

4. Procédé selon l'une des revendications 1 à 3 **caractérisé en ce que** ledit système catalytique comprend au moins un composé comportant au moins un groupement fonctionnel A et au moins un composé comportant au moins un groupement fonctionnel B.

5. Procédé selon la revendication 4 **caractérisé en ce que** le (ou les) composé(s) portant au moins un groupement fonctionnel A est (sont) choisi(s) parmi l'acide hexanoïque, l'acide adipique, l'acide tartrique, l'acide citrique, l'acide cyclohexanecarboxylique, l'acide benzoïque, l'acide salicylique, l'acide 3-hydroxybenzoïque, l'acide 2,5-dihydroxybenzoïque, l'acide 3,5-dihydroxybenzoïque, l'acide phtalique, l'acide isophtalique, l'acide téréphtalique, l'acide 5-hydroxyisophtalique et l'acide nicotinique.

6. Procédé selon l'une des revendications 1 à 5 **caractérisé en ce que** le (ou les) composé(s) portant au moins un groupement fonctionnel B est (sont) choisi(s) parmi les alcanolamines, la pyridine, la pyrimidine, la pipéridine, la pipérazine, la morpholine, l'aniline, la benzylamine, la phénéthylamine, la picoline, l'hydrazine, l'hydroxylamine, la quinoline, l'isoquinoline, l'imidazole, le 1,2,3-triazole, le 1,2,4-triazole, l'isoxazole, le thiazole, le benzothiazole, le tétrazole, le thiadiazole, la thiazine, la guanidine et leurs dérivés.

7. Procédé selon la revendication 6 **caractérisé en ce que** le composé portant au moins un groupement fonctionnel B comporte au moins un groupement fonctionnel choisi parmi les groupements hydroxy, amino, carboxy, alkyles, alkoxy, phényle, benzyle, hydroxyalkyles, phénol, aminoalkyles, alkylamino, alkylèneglycols et polyalkylèneglycols.

8. Procédé selon la revendication 7 **caractérisé en ce que** le composé portant le groupement fonctionnel B est la diéthanolamine, le 2-méthylimidazole, le 2-isopropylimidazole ou le 2-éthyl-4-méthylimidazole.

9. Procédé selon l'une des revendications 1 à 8 **caractérisé en ce que** le (ou les) composé(s) portant à la fois un groupement fonctionnel A et un groupement fonctionnel B est (sont) choisi(s) parmi l'acide anthranilique, l'acide picolinique, l'acide citrazinique, l'acide isocinchoméronique, l'acide 4-aminobenzoïque, l'acide 3-aminobenzoïque, l'acide 4-(aminométhyl) benzoïque, l'acide 3-(diméthylamino) benzoïque, l'acide 5-amino-isophtalique, l'acide 2,5-pyridinedicarboxylique, la 2-phénylglycine, l'acide 2,6-pyridinedicarboxylique, l'acide 2,4,6-pyridinetricarboxylique, l'acide 2,3-pyrazine-dicarboxylique, l'acide 4-aminophénylacétique, la N-phénylglycine, la tyrosine, la N-phénylalanine, l'acide 4-(2-aminoéthyl) benzoïque, le 2-carboxypyrrole, la proline, la thréonine, l'acide glutamique, l'acide pipécolinique, l'acide 4-hydroxy-3-(morpholinométhyl) benzoïque, l'acide aspartique et leurs dérivés.

10. Procédé selon la revendication 9 **caractérisé en ce que** le composé portant à la fois un groupement fonctionnel A et un groupement fonctionnel B est l'acide 3-aminobenzoïque ou l'acide 5-aminoisophtalique.

11. Procédé selon l'une des revendications 1 à 10 **caractérisé en ce que** le rapport molaire des groupements fonctionnels A sur les groupements fonctionnels B pris sur l'ensemble du système catalytique, est compris entre 0,1 et 100.

12. Procédé selon la revendication 11 **caractérisé en ce que** ledit rapport molaire est compris entre 0,5 et 10.

13. Procédé selon la revendication 11 **caractérisé en ce que** ledit rapport molaire est compris entre 1 et 5.

14. Procédé selon l'une des revendications 1 à 13 **caractérisé en ce que** la proportion de système catalytique dans le solvant est comprise entre 0,1 et 20 % poids.

15. Procédé selon la revendication 14 **caractérisé en ce que** ladite proportion est comprise entre 0,5 et 10 % poids.

16. Procédé selon l'une des revendications 1 à 15 **caractérisé en ce que** la température de mise en contact du gaz à traiter avec le solvant contenant le système catalytique est comprise entre 20°C et 160°C,

17. Procédé selon la revendication 16 **caractérisé en ce que** ladite température est comprise entre 115°C et 160°C.

18. Procédé selon l'une des revendications 1 à 17 **caractérisé en ce qu'**on fait circuler le mélange gaz-liquide à l'intérieur d'un monolithe ou d'une mousse céramique ou métallique.

19. Application du procédé selon l'une des revendications 1 à 18 au traitement d'effluent d'unité Claus.

## Claims

1. A process for the treatment of a gas containing hydrogen sulphide (H₂S) and sulphur dioxide (SO₂), in which said gas is brought into contact with an organic solvent containing a catalytic system which is soluble in said solvent, and a gaseous effluent which is depleted in hydrogen sulphide and sulphur dioxide is recovered along with liquid sulphur separated from the solvent by liquid-liquid decantation, the process being **characterized in that** said catalytic system comprises at least one compound comprising at least one functional group A consisting of a carboxylic acid function and at least one compound, which may or may not be distinct, comprising at least one functional group B comprising at least one nitrogen atom and which can carry out an acid-base type reaction with at least one functional group A under the implementation conditions of said process.

2. A process according to claim 1, **characterized in that** the solvent is selected from the group formed by alkylene glycols, ethers and/or esters of alkylene glycols, polyalkylene glycols, ethers and/or esters of polyalkylene glycols.

3. A process according to claim 1 or claim 2, **characterized in that** at least one of the compounds containing the functional group A is obtained by partial esterification of a polyacid or an acid anhydride by said solvent when said solvent contains at least one alcohol function.

4. A process according to one of claims 1 to 3, **characterized in that** said catalytic system comprises at least one compound comprising at least one functional group A and at least one compound comprising at least one functional group B.

5. A process according to claim 4, in which the compound(s) carrying at least one functional group A is (are) selected from hexanoic acid, adipic acid, tartaric acid, citric acid, cyclohexanecarboxylic acid, benzoic acid, salicylic acid, 3-hydroxybenzoic acid, 2,5-dihydroxybenzoic acid, 3,5-dihydrobenzoic acid, phthalic acid, isophthalic acid, terephthalic acid, 5-hydroxyisophthalic acid and nicotinic acid.

6. A process according to one of claims 1 to 5, **characterized in that** the compound(s) carrying at least one functional group B is (are) selected from alkanolamines, pyridine, pyrimidine, piperidine, piperazine, morpholine, aniline, benzylamine, phenethylamine, picoline, hydrazine, hydroxylamine, quinoline, isoquinoline, imidazole, 1,2,3-triazole, 1,2,4-triazole, isoxazole, thiazole, benzothiazole, tetrazole, thiadizaole, thiazine, guanidine and derivatives thereof.

7. A process according to claim 6, **characterized in that** the compound carrying at least one functional group B comprises at least one functional group selected from hydroxyl, amino, carboxy, alkyl, alkoxy, phenyl, benzyl, hydroxyalkyl, phenol, aminoalkyl, alkylamino, alkylene glycols and polyalkylene glycols.

8. A process according to claim 7, **characterized in that** the compound carrying the functional group B is diethanolamine, 2-methylimidazole, 2-isopropylimidazole or 2-ethyl-4-methylimidazole.

9. A process according to one of claims 1 to 8, **characterized in that** the compound(s) carrying a functional group A and a functional group B at the same time is (are) selected from anthranilic acid, picolinic acid, citrazinic acid, isocinchomeronic acid, 4-aminobenzoic acid, 3-aminobenzoic acid, 4-(aminomethyl)benzoic acid, 3-(dimethylamino)benzoic acid, 5-aminoisophthalic acid, 2,5-pyridinedicarboxylic acid, 2-phenylglycine, 2,6-pyridinedicarboxylic acid, 2,4,6-pyridinetricarboxylic acid, 2,3-pyrazinedicarboxylic acid, 4-aminophenylacetic acid, N-phenylglycine, tyrosine, N-phenylalanine, 4-(2-aminoethyl)benzoic acid, 2-carboxypyrrole, proline, threonine, glutamic acid, pipecolinic acid, 4-hydroxy-3-(morpholinomethyl)benzoic acid, aspartic acid and derivatives thereof.

10. A process according to claim 9, **characterized in that** the compound carrying a functional group A and a functional group B at the same time is 3-aminobenzoic acid or 5-aminoisophthalic acid.

11. A process according to one of claims 1 to 10, **characterized in that** the molar ratio of the functional groups A to the functional groups B taken over the whole of the catalytic system is in the range 0.1 to 100.

12. A process according to claim 11, **characterized in that** said molar ratio is in the range 0.5 to 10.

13. A process according to claim 11, **characterized in that** said molar ratio is in the range 1 to 5.

14. A process according to one of claims 1 to 13, **characterized in that** the proportion of the catalytic system in the solvent is in the range 0.1 % to 20% by weight.

15. A process according to claim 14, **characterized in that** said proportion is in the range 0.5% to 10% by weight.

16. A process according to one of claims 1 to 15, **characterized in that** the contact temperature of the gas to be treated with the solvent containing the catalytic system is in the range 20°C to 160°C.

17. A process according to claim 16, **characterized in that** said temperature is in the range 115°C to 160°C.

18. A process according to one of claims 1 to 17, **characterized in that** the gas-liquid mixture is moved inside a monolith or a ceramic or metallic foam.

19. Application of a process according to one of claims 1 to 18 to the treatment of an effluent from a Claus unit.

## Patentansprüche

1. Verfahren zur Behandlung eines Gases, das Schwefelwasserstoff (H₂S) und Schwefeldioxid (SO₂) enthält, wobei das Gas mit einem organischen Lösemittel in Kontakt gebracht wird, das ein katalytisches System enthält, das in dem Lösemittel löslich ist, wobei einerseits ein gasförmiger Abfluss, der an Schwefelwasserstoff und an Schwefeldioxid verarmt ist, und andererseits flüssiger Schwefel zurückgewonnen wird, der vom Lösemittel durch eine Flüssig-flüssig-Dekantierung getrennt wird, wobei das Verfahren **dadurch gekennzeichnet ist, dass** das katalytische System mindestens eine Verbindung umfasst, die mindestens eine funktionelle Gruppe A beinhaltet, die aus einer Carbonsäurefunktion besteht, und mindestens eine Verbindung, verschieden oder nicht, die mindestens eine funktionelle Gruppe B beinhaltet, die mindestens ein Stickstoffatom beinhaltet, die in der Lage ist, eine Reaktion vom Typ Säure-Base-Reaktion mit mindestens einer funktionellen Gruppe A unter den Umsetzungsbedingungen des Verfahrens auszuführen.

2. Verfahren nach Anspruch 1, **dadurch gekennzeichnet, dass** das Lösemittel ausgewählt ist aus der Gruppe gebildet aus den Alkylenglycolen, den Alkylenglycolethern und/oder den -estern, den Polyalkylenglycolen, den Polyalkylenglycolethern und/oder den -estern.

3. Verfahren nach einem der Ansprüche 1 und 2, **dadurch gekennzeichnet, dass** mindestens eine der Verbindungen, die die funktionelle Gruppe A enthalten, durch eine Teilveresterung einer mehrbasigen Säure oder eines Säureanhydrids durch das Lösemittel erhalten wird, wenn das Lösemittel mindestens eine Alkoholfunktion enthält.

4. Verfahren nach einem der Ansprüche 1 bis 3, **dadurch gekennzeichnet, dass** das katalytische System mindestens eine Verbindung umfasst, die mindestens eine funktionelle Gruppe A beinhaltet, und mindestens eine Verbindung, die mindestens eine funktionelle Gruppe B beinhaltet.

5. Verfahren nach Anspruch 4, **dadurch gekennzeichnet, dass** die Verbindung(en), die mindestens eine funktionelle Gruppe A trägt (tragen), ausgewählt ist (sind) aus Hexansäure, Adipinsäure, Weinsäure, Citronensäure, Cyclohexancarbonsäure, Benzoesäure, Salicylsäure, 3-Hydroxybenzoesäure, 2,5-Dihydroxybenzoesäure, 3,5-Dihydroxybenzoesäure, Phthalsäure, Isophthalsäure, Terephthalsäure, 5-Hydroxyisophthalsäure und Nicotinsäure.

6. Verfahren nach einem der Ansprüche 1 bis 5, **dadurch gekennzeichnet, dass** die Verbindung(en), die mindestens eine funktionelle Gruppe B trägt (tragen), ausgewählt ist (sind) aus den Alcanolaminen, Pridin, Pyrimidin, Piperidin, Piperazin, Morpholin, Anilin, Benzylamin, Phenethylamin, Picolin, Hydrazin, Hydroxylamin, Chinolin, Isochinolin, Imidazol, 1,2,3-Triazol, 1,2,4-Triazol, Isoxazol, Thiazol, Benzothiazol, Tetrazol, Thiadiazol, Thiazin, Guanidin und deren Derivaten.

7. Verfahren nach Anspruch 6, **dadurch gekennzeichnet, dass** die Verbindung, die mindestens eine funktionelle Gruppe B trägt, mindestens eine funktionelle Gruppe beinhaltet, ausgewählt aus den Hydroxy-, Amino-, Carboxy-, Alkyl-, Alkoxy-, Phenyl-, Benzyl-, Hydroxyalkyl-, Phenol-, Aminoalkyl-, Alkylamino-, Alkylenglycol- und Polyalkylenglycolgruppen.

8. Verfahren nach Anspruch 7, **dadurch gekennzeichnet, dass** die Verbindung, die die funktionelle Gruppe B trägt, Diethanolamin, 2-Methylimidazol, 2-Isopropylimidazol oder 2-Ethyl-4-methylimidazol ist.

9. Verfahren nach einem der Ansprüche 1 bis 8, **dadurch gekennzeichnet, dass** die Verbindung(en), die gleichzeitig eine funktionelle Gruppe A und eine funktionelle Gruppe B trägt (tragen), ausgewählt ist (sind) aus Anthranilsäure, Picolinsäure, Citrazinsäure, Isocinchomeronsäure, 4-Aminobenzoesäure, 3-Aminobenzoesäure, 4-(Aminomethyl)benzoesäure, 3-(Dimethylamino)benzoesäure, 5-Aminoisophthalsäure, 2,5-Pyridindicarbonsäure, 2-Phenylglycin, 2,6-Pyridindicarbonsäure, 2,4,6-Pyridintricarbonsäure, 2,3-Pyrazindicarbonsäure, 4-Aminophenylessigsäure, N-Phenylglycin, Tyrosin, N-Phenylalanin, 4-(2-Aminoethyl)benzoesäure, 2-Carboxypyrrol, Prolin, Threonin, Glutaminsäure, Pipecolinsäure, 4-Hydroxy-3-(morpholinomethyl)benzoesäure, Aspartinsäure und deren Derivaten.

10. Verfahren nach Anspruch 9, **dadurch gekennzeichnet, dass** die Verbindung, die gleichzeitig eine funktionelle Gruppe A und eine funktionelle Gruppe B trägt, 3-Aminobenzosäure oder 5-Aminoisophthalsäure ist.

11. Verfahren nach einem der Ansprüche 1 bis 10, **dadurch gekennzeichnet, dass** das Molverhältnis der funktionellen Gruppen A zu den funktionellen Gruppen B, bezogen auf die Gesamtheit des katalytischen Systems, im Bereich zwischen 0,1 und 100 liegt.

12. Verfahren nach Anspruch 11, **dadurch gekennzeichnet, dass** das Molverhältnis im Bereich zwischen 0,5 und 10 liegt.

13. Verfahren nach Anspruch 11, **dadurch gekennzeichnet, dass** das Molverhältnis im Bereich zwischen 1 und 5 liegt.

14. Verfahren nach einem der Ansprüche 1 bis 13, **dadurch gekennzeichnet, dass** der Anteil des katalytischen Systems in dem Lösemittel im Bereich zwischen 0,1 und 20 Gew.-% liegt.

15. Verfahren nach Anspruch 14, **dadurch gekennzeichnet, dass** der Anteil im Bereich zwischen 0,5 und 10 Gew.-% liegt.

16. Verfahren nach einem der Ansprüche 1 bis 15, **dadurch gekennzeichnet, dass** die Temperatur des Inkontaktbringens des zu behandelnden Gases mit dem Lösemittel, das das katalytische System enthält, im Bereich zwischen 20 °C und 160 °C liegt.

17. Verfahren nach Anspruch 16, **dadurch gekennzeichnet, dass** die Temperatur im Bereich zwischen 115 °C und 160 °C liegt.

18. Verfahren nach einem der Ansprüche 1 bis 17, **dadurch gekennzeichnet, dass** das Gas-Flüssigkeitsgemisch im Innern eines Monolithen oder eines keramischen oder metallischen Schaums zirkuliert wird.

19. Anwendung des Verfahrens nach einem der Ansprüche 1 bis 18 bei der Behandlung eines Abfluss aus einer Claus-Einheit.
